Europäisches Patentamt

European Patent Office

Office européen des brevets

(11) Veröffentlichungsnummer: **0 460 497 A2**

## (12) EUROPÄISCHE PATENTANMELDUNG

(21) Anmeldenummer: 91108644.5

(22) Anmeldetag: 28.05.91

(51) Int. Cl.5: **C08L 25/02**, //(C08L25/02, 25:06)

(30) Priorität: 07.06.90 DE 4018244

(43) Veröffentlichungstag der Anmeldung:
**11.12.91 Patentblatt 91/50**

(84) Benannte Vertragsstaaten:
**BE DE ES FR GB IT NL**

(71) Anmelder: **BASF Aktiengesellschaft
Carl-Bosch-Strasse 38
W-6700 Ludwigshafen(DE)**

(72) Erfinder: **Blumenstein, Uwe, Dr.
Ganderhofstrasse 2
W-6700 Ludwigshafen(DE)**
Erfinder: **Klaerner, Peter, Dr.
Hauptstrasse 62
W-6719 Battenberg(DE)**
Erfinder: **Schuch, Horst, Dr.
Kanzelbachstrasse 21
W-6804 Ilvesheim(DE)**
Erfinder: **Walter, Hans-Michael, Dr.
Am Mandelgarten 11
W-6713 Freinsheim(DE)**
Erfinder: **Hoenl, Hans, Dr.
Hauptstrasse 69 a
W-6719 Obersuelzen(DE)**

(54) **Thermoplastische Formmassen.**

(57) Thermoplastische Formmasse auf der Grundlage von Polystyrol, enthaltend, bezogen auf die Summe aus A und B

A: 50 bis 99 Gew.% mindestens eines Polystyrols oder schlagzähen Polystyrols A, wie es durch radikalische Polymerisation von Styrol, gegebenenfalls in Gegenwart eines Kautschuks erhalten wird und

B: 1 bis 50 Gew.% mindestens eines Polystyrols mit einer Molekulargewichts-Verteilungsbreite ($\overline{M}_w/\overline{M}_n$) von 1,2 oder weniger, wie es durch anionische Polymerisation erhalten wird,

mit der Maßgabe, daß $\overline{M}_n$ (B) etwa 30 000 bis 80 000 g/Mol ist und daß $\overline{M}_n$ (A) größer als $\overline{M}_n$ (B) ist, wobei $\overline{M}_n$ das Zahlenmittel und $\overline{M}_w$ das Gewichtsmittel des Molekulargewichts bedeutet.

EP 0 460 497 A2

Durch verfahrenstechnische Maßnahmen bei der Herstellung von Polybutadien (z.B. EP 37 616-619) und Butadien-Styrol-copolymerisaten (z.B. J5 8120-619 und J5 9187-041) ist es möglich, bi- und multimodale Molekulargewichtsverteilungenzu erzeugen. Verschiedene, in einem bestimmten Bereich molekulargewichtsabhängige Eigenschaften eines Werkstoffs werden dadurch verbessert.

Von in Suspension hergestellten Styrolpolymerisaten ist bekannt (US 4 673 694, US 4 663 357, US 4 137 388), daß unter Verwendung bestimmter Polymerisationstechniken, die insbesondere auf dem Einsatz von Peroxidkombinationen mit unterschiedlichen Halbwertszeiten und darauf abgestimmter Temperaturführung beruhen, bimodale oder breite Molekulargewichtsverteilungen erzeugt werden können.

Durch Emulsionspolymerisation von Styrol in Gegenwart von vorgefertigten, suspendierten Polystyrolpartikeln wird diesen Partikeln eine äußere Schicht bestehend aus hochmolekularem Polystyrol hinzugefügt (US 4 673 694, US 4 663 357), um die Stabilität der mit Treibmittel imgrägnierten Partikel für die Herstellung von Polystyrolschäumen zu verbessern.

US 4 137 388 zeigt, daß es durch eine zweistufige Temperaturführung während einer Suspensionspolymerisation möglich ist, bimodale oder breitere Molekulargewichtsverteilungen zu erzeugen, wobei gegenüber Polymerisationen mit üblicher Temperaturführung insbesondere ein niedermolekularer Anteil zugefügt wird. Dadurch wird die Verarbeitbarkeit geringfügig verbessert, ohne sichtbaren Einfluß auf andere Werkstoffeigenschaften. Zurückzuführen ist der wenig ausgeprägte Effekt auf die Tatsache, daß es sich um eine radikalische Polymerisation handelt. Das bedeutet, daß in einem Produkt mit bimodaler Molekulargewichtsverteilung beide Moden breit und stark überlappend verteilt sind. Das bringt die Gefahr mit sich, daß bei einem Übergang von einem Produkt mit einer unimodalen zu einem Produkt mit einer bimodalen Molekulargewichtsverteilung durch die breite Verteilung bei zu großem Abstand der mittleren Molekulargewichte auch Molekulargewichtsbereiche erreicht werden, die die Produkteigenschaften negativ beeinflussen. Eine scharfe, kontrollierte, abgegrenzte Einstellung der Moden ist nicht möglich.

Nachteilig ist allgemein bei Suspensionspolymerisationen das Einschleppen von Suspendierhilfsmitteln in das Endprodukt, was bekanntlich Farbe, Klarheit, UV- und Oxidationsempfindlichkeit negativ beeinflussen kann. Dazu kommt noch eine gegenüber Masse- und Lösungsmittelpolymerisationen erhöhte Umweltbelastung durch das anfallende, kontaminierte Wasser.

Aufgabe der Erfindung ist es, die Verarbeitbarkeit von Polystyrol (standard und schlagfest modifiziert) deutlich zu verbessern, ohne die mechanischen Eigenschaften und die Wärmeformbeständigkeit herabzusetzen. Diese Aufgabe wird erfindungsgemäß dadurch gelöst, daß mittels radikalischer Polymerisation in Masse hergestelltes Polystyrol mit Polystyrol geringeren Molekulargewichts, das eine sehr enge Molekulargewichtsverteilung aufweist, gemischt wird.

Die so hergestellte erfindungsgemäße Formmasse weist z.B. folgende Vorzüge auf:

- Sie besitzt eine auffallend verbesserte Verarbeitbarkeit, ohne daß die mechanischen Eigenschaften und die Wärmeformbeständigkeit herabgesetzt werden.
- Zu ihrer Herstellung kann im wesentlichen handelsübliches Polystyrol eingesetzt werden.
- Durch die Blendtechnik und durch Verwendung von Polystyrol geringeren Molekulargewichts mit einer sehr engen Molekulargewichtsverteilung (das mittels anionischer Polymerisation gezielt hergestellt werden kann) ist es leicht möglich, das Ausmaß der Modifizierung scharf zu kontrollieren und damit die erfindungsgemäße Formmasse innerhalb gewisser Grenzen entsprechend dem Anforderungsprofil an die Verarbeitbarkeit einzustellen.
- Die Komponenten der erfindungsgemäßen Formmasse werden durch Masse- bzw. Lösungspolymerisation hergestellt. Das bedeutet, daß im Gegensatz zu Formmassen, die durch Suspensionspolymerisation hergestellt wurden, keine Suspendierhilfsmittel in das Endprodukt eingeschleppt werden und kein behandlungsbedürftiges Abwasser anfällt.
- Gewöhnlich werden dem Polystyrol zur Verbesserung der Fließfähigkeit Mineralöle oder Weißöle zugegeben. Diese Schmiermittel haben neben dem Nachteil, die Wärmeformbeständigkeit herabzusetzen, die Eigenschaft, während und nach dem Verarbeiten zu wandern (Migration) und auszuschwitzen. Da für die erfindungsgemäße Formmasse im wesentlichen nur Polystyrol verwendet wird, kann ein Ausschwitzen nicht mehr stattfinden. Dieser Vorteil zeigt sich sowohl bei der Verarbeitung, wobei keine Formbeläge mehr auftreten als auch beim Gebrauch, z.B. auf dem Lebensmittelverpackungssektor.

Unmittelbarer Erfindungsgegenstand ist eine Formmasse auf der Grundlage von Polystyrol, enthaltend, bezogen auf die Summe aus A und B

A: 50 bis 99 Gew.% mindestens eines Polystyrols oder schlagzähen Polystyrols A, wie es durch radikalische Polymerisation von Styrol, gegebenenfalls in Gegenwart eines Kautschuks erhalten wird und

B: 1 bis 50 Gew.% mindestens eines Polystyrols mit einer Molekulargewichts-Verteilungsbreite

($M_w/\overline{M}_n$) von 1,2 oder weniger, wie es durch anionische Polymerisation erhalten wird, mit der Maßgabe, daß $\overline{M}_n$ (B) etwa 30 000 bis 80 000 - vorzugsweise 35 000 bis 70 000 - g/Mol ist und daß $\overline{M}_n$ (A) größer als $\overline{M}_n$ (B) ist, wobei $\overline{M}_n$ das Zahlenmittel und $\overline{M}_w$ das Gewichtsmittel des Molekulargewichts bedeutet.

Bei schlagfest modifiziertem Polystyrol wird ein Kautschukgehalt von 3 bis 25 Gew.%, durch Polymerisation von Styrol in Gegenwart des Kautschuks eingestellt.

Die meist angewandten Verfahren zur Herstellung von Styrolpolymerisaten sind die Polymerisation in Masse oder Lösung, wie sie beispielsweise in der US-PS 2 694 692 und in H. Gerrens, Chem. Ing. Techn. 52 (1980), 477 beschrieben ist.

Bei schlagfest modifiziertem Polystyrol wird ein für die Schlagzähmodifizierung von Styrolpolymerisaten gebräuchlicher natürlicher oder synthetischer Kautschuk eingesetzt. Geeignete Kautschuke im Sinne der Erfindung sind, außer Naturkautschuk, z.B. Polybutadien, Polyisopren und Mischpolymerisate des Butadiens und/oder Isoprens mit Styrol und anderen Comonomeren, die eine Glastemperatur unter -20 °C (nach K.H. Illers und H. Breuer, Kolloidzeitschrift 176 (1961) S. 110) besitzen. Besonders eignen sich Butadienpolymerisate mit einem 1,4-cis-Gehalt, der zwischen 25 und 99 Gew.% liegt. Es können aber auch Acrylatkautschuke, EPDM-, Polybutylen- und Polyoctenamerkautschuke eingesetzt werden.

Geeignetes Polystyrol ist handelsüblich, wobei im Falle des schlagfest modifizierten Polystyrols die mittlere Teilchengröße des Kautschukanteils ($d_{50}$-Wert der integralen Masseverteilung) im Bereich von 0,2 bis 7 μm liegen kann. Die VZ der Hartmatrix liegt bei 50 bis 130 ml/g (0,5 %ig in Toluol bei 23 °C).

Die Komponente B soll ein Styrolpolymerisat in enger Molekulargewichtsverteilung sein, das mittels üblicher anionischer Polymerisation über Lithiuminitiatoren herstellbar ist.

Das Mischen der beiden Komponenten kann mit allen gängigen Methoden erfolgen; in der Regel wird man eine Schmelzemischung im Extruder durchführen.

Die erfindungsgemäße Mischung aus den Komponenten A + B kann zur weiteren Verbesserung der Eigenschaften als weitere Komponente C Zusatzstoffe enthalten, wie sie für derartige Polymerisate üblich und gebräuchlich sind, z.B. Füllstoffe, Antioxidantien, Farbstoffe, UV-Stabilisatoren, Verarbeitungshilfsmittel oder Flammschutzmittel. Die Zusatzstoffe werden in üblichen Mengen von z.B. 0,1 bis zu insgesamt etwa 30 Gewichtsteilen, bezogen auf 100 Gewichtsteile der Mischung aus A + B eingesetzt.

Beispiele

In den nachstehenden Beispielen werden erfindungsgemäße Mischungen mit nicht erfindungsgemäßen bzw. mit den zugrundeliegenden schlagzähen Polystyrolsorten des Handels verglichen.

Mischungen von jeweils etwa 4,5 kg wurden auf einem Extruder der Firma Werner & Pfleiderer, Modell ZSK 30 bei 230 °C Massetemperatur hergestellt. Aus den durch Extrusion hergestellten Produkten wurden gepreßte Prüfkörper gefertigt und daran folgende Kennzahlen bestimmt - in Klammern die in den Tabellen verwendeten Abkürzungen:

1. Schmelzindex (MFI) in g/10 Min nach DIN 53 735 bei einer Temperatur von 200 °C und 5 kp Belastung

2. Schlagzähigkeit ($a_N$) in kJ/m² nach DIN 53 753

3. Erweichungstemperatur (nach Vicat) in °C bei einer Belastung von 49.05 N und einem Temperaturanstieg von 50 K/h nach DIN 53 460.

Die Molekulargewichte wurden mittels Gelpermeationschromatographie (GPC) bestimmt. Die GPC-Messungen wurden auf einem Gerät der Firma Waters mit einer Ultrastyragel-Säulenkombination desselben Herstellers durchgeführt. Die Detektion erfolgte mit einem UV-Detektor, der an ein Computer-Auswertesystem der Firma Polymer Standard Service gekoppelt war. Geeicht wurde mit Polystyrol-Standards, Elutionsmittel war Tetrahydrofuran.

3

Komponente A, handelsüblich

| Komponente | Mw [kg/mol] | Mn [kg/mol] | Mw/Mn |
|---|---|---|---|
| A1 | 348 | 172 | 2.03 |
| A2* | 173 | 72.1 | 2.4 |

* Schlagzähes Polystyrol mit 8 Gew.% Polybutadien als Kautschukanteil und einer mittleren Teilchengröße von ca. 2.7 $\mu$m.

Komponente B

| Komponente | Mw [kg/mol] | Mn [kg/mol] | Mw/Mn |
|---|---|---|---|
| B1 | 55.1 | 52 | 1.06 |
| B2 | 27.5 | 26.2 | 1.05 |
| B3 | 25.7 | 7.53 | 3.41 |

Beispiel 1; Vergleichsversuche

Dieses Beispiel zeigt, daß es gelingt, durch Blenden eines niedermolekularen Polystyrols mit enger Molekulargewichtsverteilung (B1) mit einem handelsüblichen, in Masse hergestellten Standardpolystyrol (A1) dessen Verarbeitbarkeit (als Maß wird die Fließfähigkeit (MFI) genommen) deutlich zu verbessern; bei 20 % B1 wird der MFI verdoppelt, ohne Schlagzähigkeit und Wärmeformbeständigkeit zu beeinträchtigen. Das Beispiel zeigt auch, daß der Anteil an B1 eine gewisse Grenze nicht überschreiten soll, da dann die Schlagzähigkeit abnimmt.

| | erfindungsgemäß | | | | nicht erfindungsgemäß | |
|---|---|---|---|---|---|---|
| A1 [Gew.-%] | 100 | 90 | 80 | 60 | 40 | 20 |
| B1 [Gew.-%] | 0 | 10 | 20 | 40 | 60 | 80 |
| MFI [g/10 Min] | 1.7 | 2.5 | 3.7 | 10.0 | 26.6 | > 37 |
| Vicat [°C] | 100.0 | 100.3 | 100.1 | 101.4 | 100.8 | 101.8 |
| $a_N$ [kJ/m$^2$] | 6.6 | 6.4 | 6.6 | 4.8 | 3.8 | 2.7 |

Vergleichsversuch; nicht erfindungsgemäß

Es wird gezeigt, daß ein gewisses Molekulargewicht der Komponente B nicht unterschritten werden darf, da ansonsten die Wärmeformbeständigkeit des Blends abnimmt.

| A1 [Gew.-%] | 100 | 90 | 80 | 70 |
|---|---|---|---|---|
| B2 [Gew.-%] | 0 | 10 | 20 | 30 |
| MFI [g/10 Min] | 1.7 | 3.2 | 6.3 | 10.5 |
| Vicat [°C] | 100.0 | 100.1 | 98.2 | 95.8 |
| $a_N$ [kJ/m²] | 5.6 | 4.8 | 6.0 | 3.0 |

Vergleichsversuch; nicht erfindungsgemäß

Es wird gezeigt, daß der Zusatz eines niedermolekularen Polystyrols mit für radikalische Polymerisation üblicher breiter Molekulargewichtsverteilung eine starke Zunahme des MFI, allerdings auch eine starke Abnahme der Wärmeformbeständigkeit (Nachteil!) bewirkt.

| A1 [Gew.-%] | 100 | 80 |
|---|---|---|
| B3 [Gew.-%] | 0 | 20 |
| MFI [g/10 Min] | 1.7 | > 37 |
| Vicat [°C] | 101.0 | 66.3 |
| $a_N$ [kJ/m²] | 5.6 | 4.3 |

Beispiel 2

Dieses Beispiel zeigt, daß es gelingt, durch Blenden eines niedermolekularen Polystyrols mit enger Molekulargewichtsverteilung (B1) mit einem handelsüblichen, in Masse hergestellten schlagzähen Polystyrol (A2) dessen Verarbeitbarkeit - als Maß wird die Fließfähigkeit (MFI) genommen - deutlich zu verbessern, ohne Schlagzähigkeit und Wärmeformbeständigkeit zu beeinträchtigen.

| A2 [Gew.-%] | 75 | 75 | 75 | 75 | 75 |
|---|---|---|---|---|---|
| A1 [Gew.-%] | 25 | 22.5 | 20 | 15 | 10 |
| B1 [Gew.-%] | 0 | 2.5 | 5 | 10 | 15 |
| MFI [g/10 Min] | 2.6 | 3.1 | 3.6 | 4.6 | 6.4 |
| Vicat [°C] | 94.9 | 96.9 | 97.1 | 97.0 | 96.5 |
| $a_N$ [kJ/m²] | 27.1 | 23.2 | 27.6 | 24.3 | 24.8 |

**Patentansprüche**

1. Thermoplastische Formmasse auf der Grundlage von Polystyrol, enthaltend, bezogen auf die Summe aus A und B

A: 50 bis 99 Gew.% mindestens eines Polystyrols oder schlagzähen Polystyrols A, wie es durch radikalische Polymerisation von Styrol, gegebenenfalls in Gegenwart eines Kautschuks erhalten wird und

B: 1 bis 50 Gew.% mindestens eines Polystyrols mit einer Molekulargewichts-Verteilungsbreite ($\overline{M}_w/\overline{M}_n$) von 1,2 oder weniger, wie es durch anionische Polymerisation erhalten wird,

mit der Maßgabe, daß $\overline{M}_n$ (B) etwa 30 000 bis 80 000 g/Mol ist und daß $\overline{M}_n$ (A) größer als $\overline{M}_n$ (B) ist, wobei $\overline{M}_n$ das Zahlenmittel und $\overline{M}_w$ das Gewichtsmittel des Molekulargewichts bedeutet.

2. Thermoplastische Formmasse nach Anspruch 1, enthaltend 60 bis 99 Gew.% A und 1 bis 40 % B.